# EUROPÄISCHE PATENTSCHRIFT

(11) **EP 3 666 059 B1**
(45) Veröffentlichungstag und Bekanntmachung des Hinweises auf die Patenterteilung: **25.08.2021**
(21) Anmeldenummer: 19211473.4
(22) Anmeldetag: 26.11.2019
(51) Int. Cl.: A01D 89/00, A01D 84/00

(54) **LANDWIRTSCHAFTLICHE ERNTEMASCHINE**
AGRCILTURAL HARVESTING MACHINE
MACHINE AGRICOLE DE RÉCOLTE

(30) Priorität: 10.12.2018 DE 202018107018 U
(43) Veröffentlichungstag der Anmeldung: 17.06.2020
(73) Patentinhaber: PÖTTINGER Landtechnik GmbH, 4710 Grieskirchen (AT)
(72) Erfinder: Wilflingseder, Florian, 4710 Grieskirchen (AT); Jungreithmayer, Martin, 4710 Grieskirchen (AT); Mair, Andreas, 4710 Grieskirchen (AT); Zauner, Günter, 4710 Grieskirchen (AT)
(74) Vertreter: Thoma, Michael

(56) Entgegenhaltungen:
- EP-A1- 2 941 946
- EP-A2- 2 156 729
- US-A- 4 539 798
- US-A- 4 720 962
- US-B1- 9 386 749
- US-B2- 7 650 741

## Beschreibung

Die vorliegende Erfindung betrifft eine landwirtschaftliche Erntemaschine, insbesondere einen Bandschwader oder Merger, mit einem Aufnahmeförderer zum Aufnehmen von Erntegut vom Boden umfassend einen Stachelrotor, der umlaufend antreibbare Förderzinken aufweist, einem Anschlussförderer, auf den der Aufnahmeförderer das vom Boden aufgenommene Erntegut übergibt, sowie einer über dem Stachelrotor angeordneten Förderhilfe zum Unterstützen der Erntegutübergabe von der Stachelwalze an den Anschlussförderer.

Solche Erntemaschinen sind beispielsweise aus den Schriften US 4,539,798 A, US 7,650,741 B2, EP 2 156 729 A2 und EP 2 941 946 A1 bekannt, wobei die letztgenannte Schrift einen Merger zeigt, bei dem eine Pickup mit einer rotierenden Stachelwalze Erntegut vom Boden auf das Querförderband gibt, wobei oberhalb der Pickup ein Erntegut-Führungspanel schwenkbar aufgehängt ist.

Bei landwirtschaftlichen Erntemaschinen wie Mergern oder Bandschwadern ist es bekannt, geschnittenes Erntegut wie Heu und Gras mittels einer rotierenden Stachelwalze vom Boden aufzunehmen, die bisweilen auch als Pickup bezeichnet wird. Solche Stachelwalzen erstrecken sich regelmäßig liegend quer zur Fahrtrichtung und besitzen eine Vielzahl von Förderzinken, die entlang einer Umlaufbahn gesteuert oder ungesteuert angetrieben werden. Die genannten Umlaufbahnen der Förderzinken erstrecken sich dabei regelmäßig aufrecht etwa fahrtrichtungsparallel, wobei die Förderzinken bei ungesteuerter Ausbildung entlang einer Kreisbahn um eine fixe Drehachse rotieren können und bei gesteuerter Ausbildung zusätzlich zur Umlaufbewegung verkippen und/oder ein- und ausfahren können, wobei die genannte Umlaufbahn oft von der Kreisform abweichen und eine Steuerbewegung entlang der Umlaufbahn durch eine Kurvensteuerfläche beispielsweise in Form einer Führungskulisse oder durch Kurbelsteuerhebel erfolgen kann.

Um das von den Förderzinken aufgenommene Erntegut von den genannten Förderzinken wieder abstreifen zu können, sind zwischen den Förderzinken Abstreifer vorgesehen, die zumeist in Form von streifenförmigen Abstreiferblechen ausgebildet sind und sich zwischen spaltförmigen Aussparungen begrenzen, in denen die Förderzinken angeordnet sind und mehr oder weniger weit über die Abstreiferbleche hinaus ausfahren bzw. sich dazwischen zurückziehen können. Die Umlaufbahnen der Förderzinken erstrecken sich koplanar zu den spaltförmigen Ausnehmungen, wobei in einem jeweiligen Spalt zwischen zwei benachbarten Abstreifern ein einzelner Förderzinken oder auch paarweise oder gruppenweise zusammengefasste Zinken laufen können.

Die Abstreifer erstrecken sich dabei bogenförmig um das Zentrum der Umlaufbahn der Förderzinken herum und laufen im Ablagebereich, in dem das Erntegut von den Förderzinken abgestreift werden soll, meist tangential oder leicht gekrümmt über die Umlaufbahn der Förderzinken hinaus, sodass die Förderzinken zwischen den Abstreifern abtauchen und hierdurch das Erntegut abgestreift wird.

Bei der Übergabe des Ernteguts von der genannten Pickup an den Anschlussförderer, der bei einem Bandschwader ein endlos umlaufendes Querförderband sein kann, können sich verschiedene Probleme ergeben.

Einerseits neigt das Erntegut, an den Abstreiferblechen hängen zu bleiben bzw. festzukleben, insbesondere wenn es sich um feuchtes Erntegut wie Gras handelt. Um das Hängenbleiben an den Abstreiferblechen zu vermeiden, ist in der Schrift DE 10 2017 001 012 A1 vorgeschlagen, die Abstreiferbleche durch umlaufende Förderbänder zu ersetzen, zwischen denen die Förderzinken der Pickup umlaufen. Ferner schlägt die Schrift DE 20 2017 000 595 U1 vor, im Abstreifbereich die Abstreiferbleche durch umlaufende Förderpaddel zu ersetzen, die zwischen die Umlaufbahnen der Pickup-Zinken eintauchen und das Erntegut aktiv davon abheben.

Ein sozusagen umgekehrtes Problem bei der Übergabe des Ernteguts von der Pickup an den Anschlussförderer kann darin bestehen, dass das Erntegut von den Förderzinken der Pickup gar nicht bis zu dem Bereich mitgenommen wird, in dem die Förderzinken zwischen den Abstreiferblechen abtauchen und das Erntegut von den Förderzinken abgestreift werden soll. Bei höheren Fördergeschwindigkeiten des Stachelrotors der Pickup, beispielsweise bei höheren Fahrgeschwindigkeiten oder größeren Förderleistungen, neigt insbesondere trockenes Erntegut wie getrocknetes Heu oder Stroh dazu, nicht der Umlaufbahn der Förderzinken der Pickup zu folgen, sondern von den Förderzinken nach oben abgeworfen zu werden, sodass das Erntegut gar nicht bis in den Abstreiferbereich gelangt. Durch das wieder zurückfallende und dann wieder aufgenommene Erntegut kommt es zu einer ungleichmäßigen, pulsierenden Futteraufnahme, sodass auf dem Anschlussförderer kein gleichmäßiger Erntegutstrom erreicht werden kann. Dies wäre jedoch gerade bei Querförderbändern nötig, wie sie bei Bandschwadern bzw. Mergern verwendet werden, um einen gleichmäßigen Erntegutschwad ablegen zu können.

Die Schrift EP 31 35 099 A1 schlägt bezüglich dieser Problematik vor, oberhalb des Stachelrotors der Pickup eine zusätzliche Förderhilfe in Form einer rotierenden Haspel anzuordnen, die gegenläufig zum Stachelrotor umläuft und das vom Stachelrotor nach oben geworfene Erntegut auf das nachgeschaltete Querförderband treibt bzw. gar nicht zulässt, dass das Erntegut von der Stachelwalze der Pickup nach oben geworfen wird. Da das Erntegut von der Stachelwalze der Pickup jedoch nicht immer in die gleiche Richtung bzw. im gleichen Sektor abrutscht bzw. abgeworfen wird, ist es gar nicht einfach, die besagte Haspel relativ zum Stachelrotor richtig zu positionieren, um das Erntegut verlässlich zu erfassen und auf den Querförderer zu übergeben. Wird die Haspel größer ausgebildet, um einen größeren Erfassungsbereich zu haben, wird die Vorrichtung sperrig. Wird die genannte Haspel beweglich bzw. verschieblich gelagert, könnte zwar der Eingriffsbereich korrigiert werden. Hierzu muss jedoch der variierende Abwurfbereich der Stachelwalze umfasst bzw. eine aufwendige Steuerung für die Haspelposition vorgesehen werden.

Der vorliegenden Erfindung liegt hiervon ausgehend die Aufgabe zugrunde, eine verbesserte landwirtschaftliche Erntemaschine der genannten Art zu schaffen, die Nachteile des Standes der Technik vermeidet und letzteren in vorteilhafter Weise weiterbildet. Insbesondere soll eine verlässliche Übergabe des aufgenommenen Ernteguts von der Pickup an den Anschlussförderer erreicht werden, auch wenn die aufgenommene Erntegutmenge variiert und die Abwurfrichtung bzw. -position, an der das aufgenommene Erntegut sich von der Pickup ablöst, unstetig ist.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, als Förderhilfe zum Übergeben des Ernteguts an den Anschlussförderer oberhalb des Stachelrotors eine richtungsgebende Prallfläche vorzusehen, die vom Stachelrotor nach oben geworfenes Erntegut umlenkt und zum Anschlussförderer hin leitet. Erfindungsgemäß erstreckt sich die richtungsgebende Prallfläche beabstandet vom Stachelrotor spitzwinklig zu dessen Abwurfrichtung geneigt und/oder näherungsweise in Umfangsrichtung des Stachelrotors und leitet vom Stachelrotor abgeworfenes Erntegut zu dem Anschlussförderer. Durch eine solche spitzwinklig geneigte bzw. sich näherungsweise um den Stachelrotor schmiegende Prallfläche kann ein größerer Abwurfbereich abgedeckt werden, um bei variierenden Förderbedingungen der Pickup das sich vom Stachelrotor ablösende Erntegut zu erfassen und sicher zum Anschlussförderer zu lenken.

Die genannte Prallfläche ist dabei als Pralltuch ausgebildet, das von einem Aufspanngerüst aufgespannt ist. Ein solches textiles oder folienartiges Pralltuch zeichnet sich nicht nur durch sein geringes Gewicht aus, sondern besitzt auch eine gewisse Nachgiebigkeit bzw. Verformbarkeit, sodass sich die Prallfläche an unterschiedliche Futtermengen anpassen und trotzdem die gewünschte richtungsgebende Führung erreichen kann.

Vorteilhafterweise bildet das Pralltuch auf seiner dem Stachelrotor zugewandten Seite eine glatte, geschlossene Fläche ohne zumindest größere Unebenheiten, sodass das Erntegut relativ widerstandslos an der Prallfläche entlanggleiten kann. Dies gilt insbesondere auch in einer Richtung quer zur Förderrichtung des Stachelrotors, wodurch das am Pralltuch entlanggleitende Erntegut auch schräg oder quer abgleiten bzw. abgefördert werden kann, wenn es in den Eingriffsbereich des Anschlussförderers gerät. Anders als dies bei beispielsweise Stabgittern der Fall ist, lässt das Pralltuch das Erntegut auch schräg abgleiten, wenn dies erforderlich ist. Trotzdem erfüllt das Pralltuch seine richtungsgebende Funktion, insbesondere dahingehend, dass das Erntegut, wenn es gerade oder schräg nach oben von der Stachelwalze abgeworfen wird, zum Anschlussförderer hin umgelenkt wird.

In vorteilhafter Weiterbildung der Erfindung kann das genannte Pralltuch auf einem Aufspanngerüst aufgespannt sein, das mehrere Längsrippen umfasst, die sich zumindest näherungsweise parallel zur Förderrichtung des Ernteguts entlang der vom Pralltuch aufgespannten Prallfläche erstrecken und an dem Pralltuch befestigt sind. Insbesondere können sich die genannten Längsrippen zumindest näherungsweise in Ebenen erstrecken, die senkrecht zur Umlaufachse des Stachelrotors ausgerichtet sind.

Vorteilhafterweise können die genannten Längsrippen, die das Pralltuch aufspannen und/oder die gewünschte Kontur bzw. das Profil des Pralltuchs stützen, elastisch bzw. federnd ausgebildet sein, um dem Pralltuch zwar die gewünschte Form zu geben, gleichzeitig aber auch dessen Nachgiebigkeit zu erhalten bzw. zu fördern, um eine bessere Anpassung des Pralltuchs an variierende Futtermengen zu erreichen.

Insbesondere können die genannten Längsrippen als Federelemente, beispielsweise in Form von Federlatten ausgebildet sein.

In vorteilhafter Weiterbildung der Erfindung können die genannten Längsrippen des Aufspanngerüsts in Taschen und/oder Laschen des Pralltuchs aufgenommen sein. Werden als Längsrippen flache Federlatten verwendet, können diese nach Art von Segellatten, wie sie in Segel von Booten oder Surfbrettern Verwendung finden, in entsprechende Lattentaschen des Pralltuchs gesteckt werden. Gegebenenfalls können sie an dem Pralltuch aber auch mittels einer oder mehrerer Laschen befestigt werden, um das Pralltuch entlang der Kontur der Federlatte an dieser zu halten.

Die genannten Längsrippen können vorteilhafterweise frei auskragend an einem Querträger befestigt sein, der sich näherungsweise parallel zur Umlaufachse des Stachelrotors erstreckt und eine Einlaufkante oder eine Ablaufkante der Prallfläche bilden kann.

Das Pralltuch kann zu dem genannten Querträger hin offene Aufnahmetaschen für die Längsrippen umfassen, sodass das Pralltuch mit den genannten Aufnahmetaschen auf die Längsrippen aufstülpbar ist. Hierdurch kann das Pralltuch einfach montiert und gewechselt werden.

Die Prallfläche kann sich insbesondere in dem abwurfgefährdeten Bereich des Stachelrotors erstrecken. Betrachtet man die Aufnahmevorrichtung in Richtung der Umlaufachse des Stachelrotors, kann sich die Prallfläche in einem Sektor von etwa 1 Uhr bis 2 Uhr oder 3 Uhr bis 1 Uhr oder 3 Uhr bis 12 Uhr oder 2 Uhr bis 12 Uhr erstrecken, wenn 3 Uhr in Fahrtrichtung weist und/oder 9 Uhr zum Anschlussförderer hinweist.

Vorteilhafterweise kann die Prallfläche zum Stachelrotor hin leicht rinnenförmig, konkav gewölbt sein.

Unabhängig von einer solchen Wölbung kann sich die Prallfläche in einer Schnittebene senkrecht zur Umlaufachse des Stachelrotors betrachtet, unter einem spitzen Winkel zur Vertikalen geneigt erstrecken, wobei sich der genannte Neigungswinkel zur Vertikalen im Bereich von 10° bis 80° oder 25° bis 65° oder 30° bis 60°, beispielsweise etwa 40° bis 50° erstrecken kann. Besitzt die Prallfläche die zuvor genannte rinnenförmige Wölbung, kann der genannte Neigungswinkel zur Vertikalen leicht variieren, je nachdem welchen Punkt der Prallfläche man betrachtet.

Um ein Hängenbleiben des Ernteguts an der Einlaufkante des Pralltuchs zu verhindern, kann an der Einlaufkante des Pralltuchs eine drehbare Einlaufwalze oder auch mehrere drehbare Einlaufrollen vorgesehen sein, wobei eine solche Einlaufwalze oder Einlaufrolle aktiv antreibbar sein kann, insbesondere gegenläufig zur Stachelwalze der Pickup. Alternativ kann es aber auch ausreichend sein, die genannte Einlaufwalze bzw. -rolle frei drehbar ohne Antrieb auszubilden.

Der dem Stachelrotor nachgeschaltete Anschlussförderer kann ein Querförderer sein, der das übernommene Erntegut quer zur Förderrichtung des Stachelrotors abfördert. Ein solcher Querförderer kann insbesondere ein endlos umlaufender Querförderer beispielsweise in Form eines Förderbands oder eines Kettenförderers ausgebildet sein.

Die Erfindung wird nachfolgend anhand eines bevorzugten Ausführungsbeispiels und zugehöriger Zeichnungen näher erläutert. In den Zeichnungen zeigen:
- Fig. 1:: eine Seitenansicht einer landwirtschaftlichen Erntemaschine in Form eines Bandschwaders mit vorgeschalteter Pickup, wobei oberhalb des Stachelrotors der Pickup ein schräg angestelltes Pralltuch vorgesehen ist, das dabei hilft das Erntegut von dem Stachelrotor an den nachgeschalteten Querförderer zu übergeben,
- Fig. 2:: eine ausschnittsweise, perspektivische Darstellung der landwirtschaftlichen Erntemaschine aus Figur 1, die das Pralltuch oberhalb des Stachelrotors und dessen Konturierung zeigt, und
- Fig. 3:: eine Seitenansicht der landwirtschaftlichen Erntemaschine ähnlich Figur 1, wobei das oberhalb des Stachelrotors vorgesehene Pralltuch entfernt ist, um das dann drohende Abwerfen des Ernteguts zu verdeutlichen.

Die in den Figuren gezeigte Erntemaschine 1 kann zum Anbau an einen nicht dargestellten Schlepper ausgebildet sein und hierfür beispielsweise einen Anbaubock umfassen, der mittels einer Dreipunktanlenkung am Schlepper befestigbar ist oder eine Deichsel aufweisen, um die Erntemaschine als Aufsattelgerät ausbilden und an den Schlepper anhängen zu können. Insbesondere kann die genannte Erntemaschine 1 in Form eines Bandschwaders bzw. Mergers ausgebildet sein, wie dies die Figuren zeigen, wobei alternativ gegebenenfalls auch eine Ausbildung als Ladewagen und/oder Ballenpresse in Betracht kommt.

Wie die Figuren zeigen, kann die Erntemaschine 1 einen Maschinenrahmen 3 umfassen, der über ein Fahrwerk 2 am Boden abgestützt sein kann, gegebenenfalls aber auch über einen Anbaubock schwebend vom Schlepper gehalten sein kann.

Der genannte Maschinenrahmen 3 trägt einen Aufnahmeförderer 4, der Erntegut vom Boden aufsammelt und an einen Anschlussförderer 5 übergibt, der in Form eines Querförderers ausgebildet sein kann, um das Erntegut quer zur Fahrtrichtung 6 abzufördern und in einem Schwad abzulegen.

Der genannte Anschlussförderer 5 kann insbesondere ein Querförderband 15 umfassen, das endlos umlaufend antreibbar ist und einen näherungsweise liegend ausgerichtete Ablage- und Förderfläche bildet, auf die der Aufnahmeförderer 4 das Erntegut ablegt.

Der Aufnahmeförderer 4 kann einen Stachelrotor 7 aufweisen, der liegend angeordnet ist und sich mit seiner Umlaufachse 9 quer liegend zur Fahrtrichtung erstrecken kann. Die Förderzinken 8 des Stachelrotors 7 können dabei ungesteuert um die genannte Umlaufachse 9 auf einer Kreisbahn umlaufen oder auch gesteuert auf einer gegebenenfalls nicht kreisförmigen Umlaufbahn um die genannte Umlaufachse 9 herum umlaufen, wie dies eingangs erläutert ist.

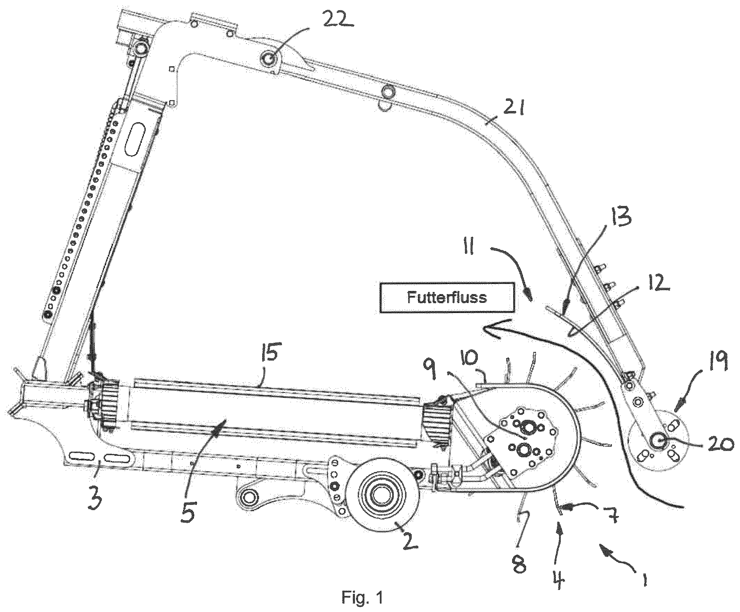

Der genannte Stachelrotor 7 kann zwischen den Förderzinken 8 angeordnete, sich bogenförmig um die Umlaufachse 9 herum erstreckende Abstreiferleisten 10 aufweisen, zwischen denen sich die Förderzinken 8 heraus erstrecken, vgl. Figur 1.

Der Stachelrotor 7 kann mit seiner Oberseite und/oder dem stromabseitigen Bereich der genannten Abstreiferleisten 10 zumindest näherungsweise auf der Höhe des Anschlussförderers 5 angeordnet sein, um das Erntegut sanft auf den Anschlussförderer 5 übergeben zu können.

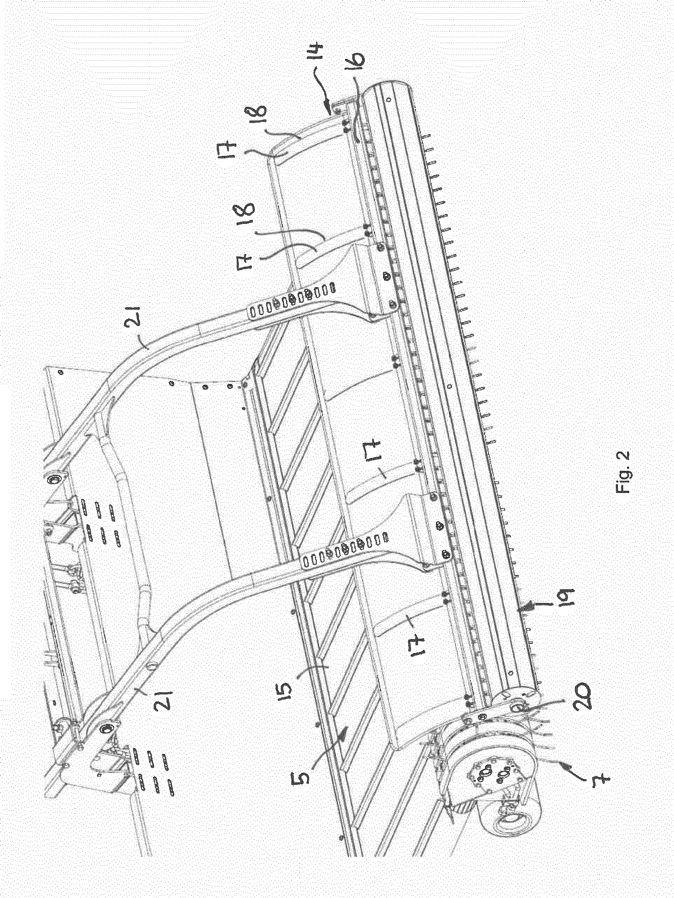

Wie die Figuren 1 und 2 verdeutlichen, ist oberhalb des Stachelrotors 7 eine Förderhilfe 11 vorgesehen, die ein sich um den Umfang des Stachelrotors 7 schmiegendes bzw. spitzwinklig zur Radialrichtung vom Stachelrotor 7 angeordnetes Pralltuch 13 aufweist, dessen dem Stachelrotor 7 zugewandte Seite eine Prallfläche 12 bildet, um vom Stachelrotor 7 nach oben geworfenes Erntegut nach hinten zum Querförderband 15 zu leiten.

Betrachtet man entsprechend Figur 1 die genannte Prallfläche 12 in Richtung der Umlaufachse 9, erstreckt sich die genannte Prallfläche 12 in einem Segment von etwa 2 Uhr bis 1 Uhr bzw. 3 Uhr bis 12 Uhr bzw. in einem Quadranten, der in Fahrtrichtung vorne und oberhalb des Stachelrotors 7 liegt.

In einer Schnittebene senkrecht zur Umlaufachse 9 betrachtet, kann sich die Prallfläche 12 über ein Winkelsegment von 30° bis 120° oder 30° bis 90° oder auch 30° bis 70° erstrecken.

Vorteilhafterweise kann die genannte Prallfläche 12 auf ihrer dem Stachelrotor 7 zugewandten Seite konkav, näherungsweise rinnenförmig gewölbt sein, wobei grundsätzlich aber auch eine ebene Ausbildung in Betracht kommt.

Vorteilhafterweise erstreckt sich die genannte Prallfläche 12 zur Vertikalen spitzwinklig geneigt, beispielsweise unter einem Winkel von etwa 30° bis 60° geneigt.

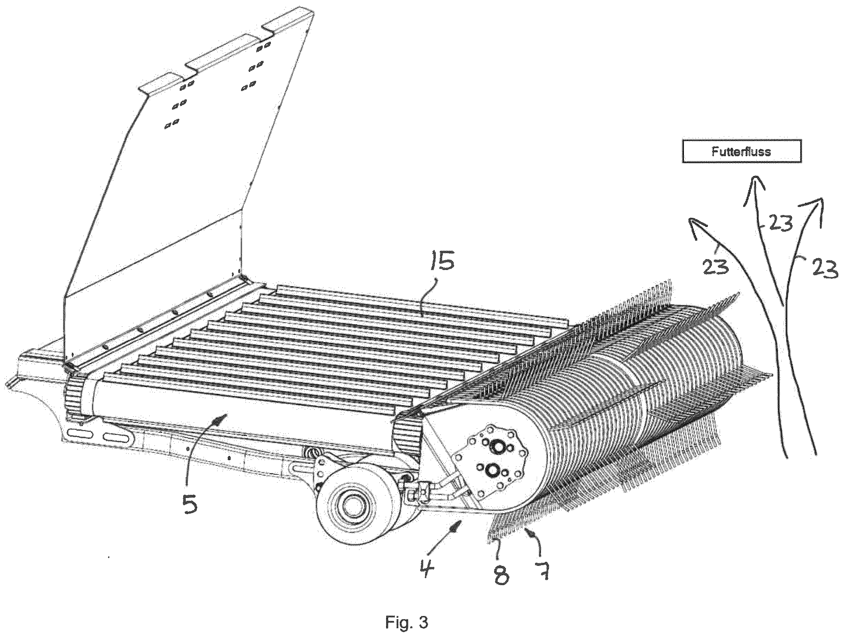

Wie insbesondere Figur 3 verdeutlicht, wird die Prallfläche 12 von einem Pralltuch 13 gebildet, das auf einem Aufspanngerüst 14 aufgespannt ist.

Das genannte Aufspanngerüst 14 kann einen Querträger 16 umfassen, der sich liegend quer zur Fahrtrichtung und/oder parallel zur Umlaufachse 9 erstrecken kann und eine Einlaufkante des Pralltuchs 13 bilden kann.

Von dem genannten Querträger 16 kragen Längsrippen 17 aus, die sich in Förderrichtung des Ernteguts entlang der Prallfläche 12 erstrecken können und quer zur Förderrichtung voneinander beabstandet, über die Breite des Pralltuchs 13 verteilt angeordnet sein können, vgl. Figur 2.

Die genannten Längsrippen 17 können beispielsweise in Form von Federstäben oder Federlatten ausgebildet sein, um das Pralltuch 13 elastisch aufzuspannen. Die die Längsrippen 17 bildenden Federlatten können leicht bogenförmig konturiert ausgebildet sein bzw. eine leicht bogenförmige Grundkontur besitzen, um das Pralltuch 13 leicht rinnenförmig konturiert aufzuspannen.

Das Pralltuch 13 kann Aufnahmetaschen aufweisen, in welche die genannten Längsrippen 17 einsteckbar sind bzw. können die Aufnahmetaschen 18 des Pralltuchs 13 zu dem Querträger 16 hin offen sein, sodass das Pralltuch 13 mit den Aufnahmetaschen 18 auf die Längsrippen 17 aufgestülpt werden kann. Um ein Herabrutschen zu verhindern, kann das Pralltuch 13 an dem Querträger 16 fixiert werden, beispielsweise mittels einer Klemmleiste.

Das Pralltuch 13 kann aus einem textilen Stoff oder aus einer Folie oder aus einem Kompositmaterial bestehen, beispielsweise einem beschichteten Gewebe, welches einerseits die ausreichende Reißfestigkeit besitzt und andererseits eine glatte Oberfläche aufweist, die das Erntegut leicht entlanggleiten lässt.

Wie Figur 1 und 2 zeigen, kann an der Einlaufkante des Pralltuchs 13 eine Einlaufwalze 19 angeordnet sein, deren Walzendrehachse 20 quer zur Fahrtrichtung liegend und/oder näherungsweise parallel zur Umlaufachse 9 des Stachelrotors 7 ausgerichtet sein kann. Die Einlaufwalze 19 kann sich wie das Pralltuch 13 über die im Wesentlichen gesamte Breite des Stachelrotors erstrecken.

Der genannte Einlaufrotor 19 kann unangetrieben frei umlaufen, gegebenenfalls aber auch angetrieben sein, insbesondere gegenläufig zur Stachelwalze 7.

Das Pralltuch 13 sowie die Einlaufwalze 19 sind über einen oder mehrere Tragarme 21 am Maschinenrahmen 3 der Erntemaschine 1 befestigt. Vorteilhafterweise können die Tragarme 21 um eine liegende, quer zur Fahrtrichtung ausgerichtete Tragarmschwenkachse 22 gelagert sein, um das Pralltuch 13 in seinem Abstand von der Stachelwalze 7 einstellen zu können und/oder von der Stachelwalze 7 wegschwenken zu können, insbesondere aus der in den Figuren 1 und 2 gezeigten Arbeitsposition nach oben weg von dem Stachelrotor 7 in eine Wartungs- und/oder Inaktivstellung.

Figur 3 verdeutlicht den drohenden Erntegutabwurf vom Stachelrotor 7, wenn das Pralltuch 13 weggeschwenkt bzw. entfernt ist. Die drei Pfeile 23 verdeutlichen dabei die möglichen Abwurfrichtungen von dem Stachelrotor 7 nach oben und/oder schräg nach vorne. Um dies zu verhindern, ist das Pralltuch 13 und die Einlaufwalze 19 vorgesehen, wie dies die Figuren 1 und 2 zeigen.

## Patentansprüche

1. Landwirtschaftliche Erntemaschine, insbesondere Merger, mit einem Aufnahmeförderer (4) zum Aufnehmen von Erntegut vom Boden umfassend einen Stachelrotor (7), der umlaufend antreibbare Förderzinken 8 aufweist, einem Anschlussförderer (5), auf den der Aufnahmerotor (4) das vom Boden aufgenommene Erntegut übergibt, sowie einer über dem Stachelrotor (7) angeordneten Förderhilfe (11) zum Unterstützen der Erntegutübergabe von dem Stachelrotor (7) an den Anschlussförderer (5), **dadurch gekennzeichnet, dass** die Förderhilfe (11) ein richtungsgebendes Pralltuch (13) umfasst, das auf einem Aufspanngerüst (14) aufgespannt und beabstandet vom Stachelrotor (7) angeordnet ist, wobei das Pralltuch (13) sich spitzwinklig zur Abwurfrichtung des Stachelrotors (7) geneigt und/oder näherungsweise in Umfangsrichtung des Stachelrotors (7) erstreckt und vom Stachelrotor (7) abgeworfenes Erntegut zum Anschlussförderer (5) umlenkt und ableitet.

2. Landwirtschaftliche Erntemaschine nach dem vorhergehenden Anspruch, wobei das Aufspanngerüst (14) mehrere Längsrippen (17) umfasst, die sich näherungsweise parallel zur Förderrichtung des Ernteguts entlang der Prallfläche (12) erstrecken und an denen das Pralltuch (13) befestigt ist.

3. Landwirtschaftliche Erntemaschine nach dem vorhergehenden Anspruch, wobei die Längsrippen (17) in Aufnahmetaschen (18) und/oder -laschen des Pralltuchs (13) aufgenommen sind.

4. Landwirtschaftliche Erntemaschine nach einem der beiden vorhergehenden Ansprüche, wobei die Längsrippen (17) als Federelemente, insbesondere Federlatten ausgebildet sind.

5. Landwirtschaftliche Erntemaschine nach einem der Ansprüche 2 bis 4, wobei das Aufspanngerüst (14) einen Querträger (16) umfasst, an dem die Längsrippen (17) frei auskragend befestigt sind.

6. Landwirtschaftliche Erntemaschine nach dem vorhergehenden Anspruch, wobei das Pralltuch (13) zum Querträger (16) hin offene Aufnahmetaschen (18) umfasst, sodass das Pralltuch (13) mit den Aufnahmetaschen (18) auf die Längsrippen (17) aufstülpbar ist.

7. Landwirtschaftliche Erntemaschine nach einem der vorhergehenden Ansprüche, wobei das Pralltuch (13) auf seiner dem Stachelrotor (7) zugewandten Seite eine glatte, geschlossene Prallfläche bildet.

8. Landwirtschaftliche Erntemaschine nach einem der vorhergehenden Ansprüche, wobei die Prallfläche (12), bei Betrachtung in Richtung der Umlaufachse (9) des Stachelrotors (7), sich in einem Sektor von 1 Uhr bis 2 Uhr oder 12 Uhr bis 3 Uhr erstreckt, wenn 3 Uhr in die Fahrtrichtung weist und/oder 9 Uhr zum Anschlussförderer (5) hinweist.

9. Landwirtschaftliche Erntemaschine nach einem der vorhergehenden Ansprüche, wobei die Prallfläche (12) zum Stachelrotor (7) hin konkav, insbesondere leicht rinnenförmig, gewölbt ist und sich zur Vertikalen unter einem spitzen Winkel geneigt, insbesondere unter einem Winkel von etwa 10° bis 80° oder 25° bis 65° oder 40° bis 50° geneigt, erstreckt.

10. Landwirtschaftliche Erntemaschine nach einem der vorhergehenden Ansprüche, wobei im Einlaufbereich der Prallfläche (12) eine drehbare Einlaufwalze (19) angeordnet ist.

11. Landwirtschaftliche Erntemaschine nach einem der vorhergehenden Ansprüche, wobei der Anschlussförderer (5) ein endlos umlaufender Querförderer, insbesondere ein Querförderband (15), ist.

12. Landwirtschaftliche Erntemaschine nach einem der vorhergehenden Ansprüche, wobei die Prallfläche (12) an zumindest einem Tragarm (21) befestigt ist, der um eine liegende, sich quer zur Fahrtrichtung erstreckende Tragarmschwenkachse (22) schwenkbar am Maschinenrahmen (3) gelagert ist, sodass die Prallfläche (12) von dem Stachelrotor (7) weg und auf diesen zu schwenkbar ist.

13. Landwirtschaftliche Erntemaschine nach dem vorhergehenden Anspruch, wobei die Tragarmschwenkachse (22) oberhalb des Anschlussförderers (5) angeordnet ist und von der Umlaufachse (9) des Stachelrotors (7) einen Abstand aufweist, der mindestens dem zweifachen oder dreifachen des Durchmessers des Stachelrotors (7) aufweist.

## Claims

1. An agricultural harvesting machine, in particular a merger, with a pick-up conveyor (4) for picking up crop from the ground, comprising a spike rotor (7) having rotatably drivable feed tines (8), a connecting conveyor (5) on to which the pick-up rotor (4) transfers the crop that has been picked up from the ground, and a conveying aid (11) arranged above the spike rotor (7) to assist the transfer of crop from the spike rotor (7) to the connecting conveyor (5), **characterised in that** the conveying aid (11) comprises a directional baffle curtain (13), which is stretched on a stretching frame (14) and arranged at a distance from the spike rotor (7), wherein the baffle curtain (13) extends inclined at an acute angle relative to the discharge direction of the spike rotor (7) and/or approximately in the circumferential direction of the spike rotor (7) and deflects and diverts crop discharged by the spike rotor (7) to the connecting conveyor (5).

2. The agricultural harvesting machine according to the preceding claim, wherein the stretching frame (14) comprises a plurality of longitudinal ribs (17) which extend along the baffle surface (12) approximately parallel to the conveying direction of the crop and on which the baffle curtain (13) is fastened.

3. The agricultural harvesting machine according to the preceding claim, wherein the longitudinal ribs (17) are received in receiving pockets (18) and/or brackets of the baffle curtain (13).

4. The agricultural harvesting machine according to one of the two preceding claims, wherein the longitudinal ribs (17) are configured as spring elements, in particular spring slats.

5. The agricultural harvesting machine according to one of claims 2 to 4, wherein the stretching frame (14) comprises a cross-member (16), on which the longitudinal ribs (17) are fastened in a freely projecting manner.

6. The agricultural harvesting machine according to the preceding claim, wherein the baffle curtain (13) comprises receiving pockets (18) that are open towards the cross-member (16), such that the baffle curtain (13) can be placed with the receiving pockets (18) on the longitudinal ribs (17).

7. The agricultural harvesting machine according to one of the preceding claims, wherein the baffle curtain (13) forms a smooth, closed baffle surface on its side facing the spike rotor (7).

8. The agricultural harvesting machine according to one of the preceding claims, wherein the baffle surface (12), as viewed in the direction of the axis of rotation (9) of the spike rotor (7), extends in a sector from 1 o'clock to 2 o'clock or 12 o'clock to 3 o'clock, if 3 o'clock points in the direction of travel and/or 9 o'clock points towards the connecting conveyor (5).

9. The agricultural harvesting machine according to one of the preceding claims, wherein the baffle surface (12) is curved in a concave fashion towards the spike rotor (7), in particular in a slightly channel-shaped fashion, and extends inclined at an acute angle, in particular inclined at an angle of approximately 10° to 80° or 25° to 65° or 40° to 50°, to the vertical.

10. The agricultural harvesting machine according to one of the preceding claims, wherein a rotatable feed roll (19) is arranged in the intake region of the baffle surface (12).

11. The agricultural harvesting machine according to one of the preceding claims, wherein the connecting conveyor (5) is a continuously circulating cross conveyor, in particular a cross-conveyor belt (15).

12. The agricultural harvesting machine according to one of the preceding claims, wherein the baffle surface (12) is fastened to at least one support arm (21), which is mounted on the machine frame (3) pivotably about a horizontal support arm pivot axis (22) extending transverse to the direction of travel, such that the baffle surface (12) is pivotable away from and towards the spike rotor (7).

13. The agricultural harvesting machine according to the preceding claim, wherein the support arm pivot axis (22) is arranged above the connecting conveyor (5) and is at a distance of at least twice or three times the diameter of the spike rotor (7) from the axis of rotation (9) of the spike rotor (7).

## Revendications

1. Machine agricole de récolte, en particulier andaineur, comportant un transporteur de ramassage (4) destiné à ramasser le produit de la récolte sur le sol et comprenant un rotor à pointes (7), qui comporte des dents de transport (8) pouvant être entraînées en rotation, un transporteur de correspondance (5), sur lequel le rotor de ramassage (4) transfère le produit de la récolte ramassé sur le sol, ainsi qu'une aide au transport (11) disposée au-dessus du rotor à pointes (7) pour aider au transfert du produit de la récolte du rotor à pointes (7) au transporteur de correspondance (5), **caractérisée en ce que** l'aide au transport (11) comprend une toile déflectrice (13) de direction, qui est tendue sur une structure de fixation (14) et disposée de manière espacée du rotor à pointes (7), la toile déflectrice (13) s'étendant de manière inclinée en formant un angle aigu par rapport à la direction de décharge du rotor à pointes (7) et/ou approximativement dans la direction circonférentielle du rotor à pointes (7) et déviant et détournant le produit de la récolte déchargé par le rotor à pointes (7) vers le transporteur de correspondance (5).

2. Machine agricole de récolte selon la revendication précédente, dans laquelle la structure de fixation (14) comprend plusieurs nervures longitudinales (17), qui s'étendent approximativement parallèlement à la direction de transport du produit de la récolte le long de la surface déflectrice (12) et sur lesquelles la toile déflectrice (13) est fixée.

3. Machine agricole de récolte selon la revendication précédente, dans laquelle les nervures longitudinales (17) sont reçues dans des poches et/ou des languettes de réception (18) de la toile déflectrice (13).

4. Machine agricole de récolte selon l'une des deux revendications précédentes, dans laquelle les nervures longitudinales (17) sont réalisées sous la forme d'éléments élastiques, en particuliers de lattes élastiques.

5. Machine agricole de récolte selon l'une des revendications 2 à 4, dans laquelle la structure de fixation (14) comprend une traverse (16), sur laquelle les nervures longitudinales (18) sont fixées de manière à faire saillie librement.

6. Machine agricole de récolte selon la revendication précédente, dans laquelle la toile déflectrice (13) comprend des poches de réception (18) ouvertes vers la traverse (16), de telle sorte que la toile déflectrice (13) peut être enfoncée avec les poches de réception (18) sur les nervures longitudinales (17).

7. Machine agricole de récolte selon l'une des revendications précédentes, dans laquelle la toile déflectrice (13) forme, sur son côté orienté vers le rotor à pointes (7), une surface déflectrice lisse fermée.

8. Machine agricole de récolte selon l'une des revendications précédentes, dans laquelle la surface déflectrice (12), observée dans la direction de l'axe de rotation (9) du rotor à pointes (7), s'étend dans un secteur de 1 heure à 2 heures ou de 12 heures à 3 heures, quand 3 heures indique la direction de déplacement et/ou 9 heures indique vers le transporteur de correspondance (5).

9. Machine agricole de récolte selon l'une des revendications précédentes, dans laquelle la surface déflectrice (12) est arquée de manière concave, en particulier légèrement en forme de gouttière, vers le rotor à pointes (7) et s'étend de manière inclinée par rapport à la verticale selon un angle aigu, en particulier selon un angle d'environ 10° à 80° ou 25° à 65° ou 40° à 50°.

10. Machine agricole de récolte selon l'une des revendications précédentes, dans laquelle un cylindre d'entrée (19) rotatif est disposé dans la zone d'entrée de la surface déflectrice (12).

11. Machine agricole de récolte selon l'une des revendications précédentes, dans laquelle le transporteur de correspondance (5) est un transporteur transversal tournant sans fin, en particulier une bande transporteuse transversale (15).

12. Machine agricole de récolte selon l'une des revendications précédentes, dans laquelle la surface déflectrice (12) est fixée sur au moins un bras porteur (21), qui est monté sur le bâti de la machine (3) de manière pivotante sur un axe de pivotement de bras porteur (22) horizontal s'étendant transversalement à la direction de déplacement, de telle sorte que la surface déflectrice (12) peut être pivotée de façon à être éloignée et rapprochée du rotor à pointes (7).

13. Machine agricole de récolte selon la revendication précédente, dans laquelle l'axe de pivotement de bras porteur (22) est disposé au-dessus du transporteur de correspondance (5) et présente une distance par rapport à l'axe de rotation (9) du rotor à pointes (7) qui représente au moins le double ou le triple du diamètre du rotor à pointes (7).
